# EUROPÄISCHE PATENTSCHRIFT

(11) **EP 0 599 310 B1**
(45) Veröffentlichungstag und Bekanntmachung des Hinweises auf die Patenterteilung: **11.09.1996**
(21) Anmeldenummer: 93119011.0
(22) Anmeldetag: 25.11.1993
(51) Int. Cl.: F16H 7/02, F16G 1/28, E05F 5/10

(54) **Riementrieb eines Torantriebs**
Door operator belt drive
Entraînement par courroie d'une commande de porte

(30) Priorität: 27.11.1992 DE 4239963
(43) Veröffentlichungstag der Anmeldung: 01.06.1994
(73) Patentinhaber: Döring, Erich, Dr.h.c., CH-9442 Berneck (CH)
(72) Erfinder: Döring, Erich, Dr.h.c., CH-9442 Berneck (CH)
(74) Vertreter: Behrens, Dieter, Dr.-Ing.

(56) Entgegenhaltungen:
- EP-A- 0 455 358
- DD-A- 238 093
- DE-A- 4 039 207
- DE-C- 959 505
- DE-U- 8 507 645
- GB-A- 2 188 120
- US-A- 4 079 633

## Beschreibung

Die Erfindung betrifft einen Riementrieb eines Torantriebs, mit einem biegsamen wellen- oder zahnförmigen Treibriemen aus einem Kunststoffstreifen, der über ein gewelltes oder gezahntes Antriebsrad geführt werden kann, einen solchen Treibriemen, einen Torantrieb mit einem solchen Riementrieb, insbesondere für Garagentore oder für Werkräume, und ein PKW-Garagentor oder Werkraumtor mit einem solchen Torantrieb, vor allem solche, die mit einem Flügel-, Paneel-, Roll- oder Schwingtorflügel versehen sind.

Treibriemen der eingangs genannten Art mit formschlüssiger Übertragung der Antriebskraft von einem Antriebszahnrad sind ebenso bekannt wie Treibriemen in Form von flachen Riemen, die unter Spannung über glatte Antriebsscheiben und Umlenkrollen geleitet werden, so daß die Übertragung des Antriebskraft der angetriebenen Scheibe auf den Riemen durch Kraft- bzw. Reibschluß erfolgt. Zur Erhöhung der übertragbaren Kraft ist es bekannt, den Treibriemen als Zahnriemen mit meist einseitig von einem Trägerband vorstehenden Zähnen auszubilden, wobei die Antriebsscheiben eine entsprechende Zahnung auf ihrer Umfangsfläche aufweisen, beispielsweise als angepaßte Zahnräder ausgebildet sind. Es sind auch Treibriemen bekannt, die sowohl kraftschlüssig als auch formschlüssig mit dem Antriebsrad (Riemenscheibe) Zusammenwirken. Bekannt sind Flachriemen, die im Abstand voneinander Durchbrechungen aufweisen, in die entsprechende vom Umfang mit der Riemenscheibe abstehende Stifte eingreifen. Ebenso ist ein wellenförmig oder zahnförmig geformter Treibriemen bekannt (DD-PS 238 093; FR-PS 1 379 737), der über beabstandete Zahnräder von der Breite des Treibriemens umläuft, von denen eines angetrieben ist. Zwischen den wellenförmigen Verformungen kann er Durchbrechungen aufweisen, um hier Treibkraft ein- oder auszuleiten.

Andere vergleichbare Antriebe sind Kettentriebe mit entsprechenden Kettenrädern, solche mit Stahlseilen, die über genutete Seilscheiben geführt sind, oder Seiltriebe, bei denen die Seile im Abstand voneinander aufgesetzte Kugeln oder dergleichen aufweisen, die in entsprechende Verbreiterungen von Nuten der Antriebsscheiben eingreifen. Alle diese Maßnahmen dienen dazu, eine formschlüssige Antriebskraftübertragung zu erreichen. Die Einsatzgebiete aller dieser Antriebe sind teilweise voneinander unterschiedlich, teilweise überlappen sie einander. Stärken und Schwächen bzw. Vor- und Nachteile dieser Antriebe sind hinreichend bekannt. Ebenso sind gesicherte Werkstoffkenntnisse für Flach- und Keilriemen erarbeitet.

Der Erfindung liegt das Problem zugrunde, einen Riementrieb, einen Torantrieb, einen Treibriemen und ein Tor der eingangs genannten Art mit einem solchen Treibriemenantrieb zu schaffen, mit dem sich gute kraftschlüssige Antriebskraftübertragung und Geräuscharmut bei sehr einfacher und damit sehr preiswerter Ausbildung erzielen läßt. Es soll ein guter Kompromiß zwischen weniger anspruchsvoller Ausbildung und Leistung, geringen Herstellungskosten sowie Betriebssicherheit unter Verzicht auf die Übertragbarkeit besonders hoher Antriebsleistungen erzielt werden.

Ein dieses technische Problem lösender Riemenantrieb, Treibriemen und Torantrieb der eingangs genannten Art sind mit ihren Ausgestaltungen in den Patentansprüchen gekennzeichnet.

Der Treibriemen zeichnet sich dadurch aus, daß er aus einem durch Prägung bleibend verformten Kunststoff gefertigt ist und daß der Riemen zwischen den Wellenköpfen, wenigstens auf einer Seite der Wellung, einen seitlich abstehenden Seitenstreifen zur Aufnahme einer Längskraft aufweist.

Aufgrund dieser Ausbildung ist ein sehr einfacher durch Kalt- oder Warmprägung aus einem flachen Kunststoffstreifen hergestellter Treibriemen geschaffen, der eine mittlere bogen- oder zahnförmig gewellte Zone zum formschlüssigen Eingriff mit einem Antriebs- oder Abtriebsorgan hat und einen seitlich davon abstehende Seitenstreifen zur Aufnahme der Längsbelastung aufweist. Auch bei vergleichsweise dünner Ausbildung des Treibriemens besteht daher nicht die Gefahr, daß er sich bei längerem Betrieb längt und somit der Eingriff in das Antriebs- oder Abtriebszahnrad verschlechtert wird. Die geraden, nichtgestreckten Randzonen garantieren eine Standfestigkeit der durch Streckung erfolgten mittigen Prägung. Bei etwa mittiger Anordnung der Seitenstreifen zwischen den Wellenköpfen wird eine vorteilhafte Herstellbarkeit erreicht, weil die Prägung durch gegenläufige Prägezahnräder erfolgen kann, die die Werkstoffverformung aus der Ebene des ursprünglich flachen Streifens in beide Richtungen etwa gleich weit vornehmen. Außerdem bildet die mittige Anordnung den Vorteil der gleichmäßigen Abstützung in beide Richtungen, sodaß das Treiborgan von beiden Seiten verwendbar ist. Schließlich läßt es starken Richtungswechsel über Umlenkräder zu und ist so am leichtesten eine für den Antrieb mit Zahnrädern günstige Lage erreichbar, die zu einer Krafteinleitung auf oder nahe dem Teilkreis des Zahnrades führt.

Es ist aber auch eine Ausführungsform des Treibriemens zweckmäßig, bei der die Seitenstreifen in Höhe der Wellenköpfe vorgesehen sind und die Wellenköpfe in der Ebene der Seitenstreifen selbst eben ausgebildet sind. Ein solcher Treibriemen hat eine besonders hohe Formstabilität in der Ebene der Seitenstreifen und läßt vergleichsweise hohe Zugkräfte bei sehr dünner Ausbildung zu.

Die Seitenstreifen des Treibriemens und dementsprechend die zylindrischen Randbereiche der Zahnräder, wenn diese vorgesehen sind, haben zweckmäßigerweise eine Breite von bis zu 50% der Breite der Wellung. Die Breite kann aber auch geringer sein.

Die Kosten des neuen Treibriemens sind im Vergleich zu Ketten, Keilriemen, Zahnriemen und dergleichen vergleichweise gering, teilweise betragen sie nur etwa 15%. Dementsprechend preiswerter ist der Riementrieb und das Tor.

Als Werkstoffe für den Riemen kommen hochbelastbare Kunststoffe infrage, die in verschiedenen Ausführungen bekannt sind. Als geeignet haben sich Polyamid und Polypropylen erwiesen. Diese Kunststoffe können bewehrt sein. Dabei sieht eine besondere Ausbildungsform vor, daß jeder Seitenstreifen des Treibriemens mit einer Reibauflage aus Gummi oder einem Haftgewebe versehen ist.

Insbesondere dies ermöglicht eine Ausbildung eines Riementriebs unter Einsatz des erfindungsgemäßen Treibriemens, bei der das angetriebene Zahnrad, d.h. das Antriebszahnrad, gegebenenfalls aber auch das Abtriebszahnrad, seitlich der Zahnung einen zylindrischen Randbereich hat, desen Durchmesser dem Durchmesser des Teilkreises des Zahnkranzes gleicht, auf dem der Seitenstreifen des Riemens aufliegt. Auf diese Weise kann eine reibschlüssige Antriebskraftübertragung zusätzlich zur formschlüssigen erfolgen, ohne daß die Seitenstreifen durch hohen Schlupf gegenüber dem Zahnrad schnell verschleißen.

Bei einem Riementrieb mit dem erfindungsgemäßen Treibriemen hat sich eine Ausbildungsform als zweckmäßig erwiesen, bei der wenigstens ein weiteres gezahntes Rad vorgesehen ist, das mit dem angetriebenen gezahnten Rad, also dem Antriebs- bzw. Abtriebsrad, lose zu kämmen vermag und den Riemen in den Zahnlücken des ersten Zahnrads hält.

Zweckmäßig kann es sein, daß alle Zahnräder unterschiedliche Durchmesser aufweisen, weil dadurch einerseits der Eingriff begünstigt ist, andererseits aber vom Antrieb eines einen Zahnrades auf den Antrieb des anderen Zahnrades umschaltbar ist, also ein Schaltgetriebe verwirklicht ist, so daß von einer Laufgeschwindigkeit des Riemens auf eine andere umgeschaltet werden kann. Im Betrieb hat sich gezeigt, daß der Antrieb praktisch schlupffrei erfolgt, und zwar auch bei Stoßbelastung. Sind drei miteinander kämmende Zahnräder unterschiedlichen Durchmessers vorgesehen, über die der Treibriemen läuft, können drei Laufgeschwindigkeiten des Treibriemens verwirklicht werden.

Der erfindungsgemäße Treibriemen läßt sich mit besonderem Vorteil bei Torantrieben, vor allem Flügel-, Paneel-, Roll- oder Schwingtorantrieben, insbesondere für PKW-Garagen oder für Werkräume einsetzen, wobei vom Umlenkrad oder vom Treibriemen die Antriebskraft für das Öffnen und Schließen des Torblatts über besondere Mittel abgenommen wird. Ein solcher Torantrieb ist ebenfalls durch die Erfindung geschaffen.

Schließlich ist ein PKW-Gargentor und ein Werkraumtor mit einem erfindungsgemäßen Torantrieb geschaffen.

Ein Ausführungsbeispiel der Erfindung ist anhand einer Zeichnung näher erläutert, die zeigt:
- Fig. 1: einen Riementrieb im Längsschnitt,
- Fig. 2: einen Treibriemen im Längsmittenschnitt,
- Fig. 3: einen Treibriemen in der Draufsicht,
- Fig. 4: einen Teil eines Treibriemens in Schrägperspektive, und
- Fig. 5: eine Abwandlung des Treibriemens in der Seitenansicht.

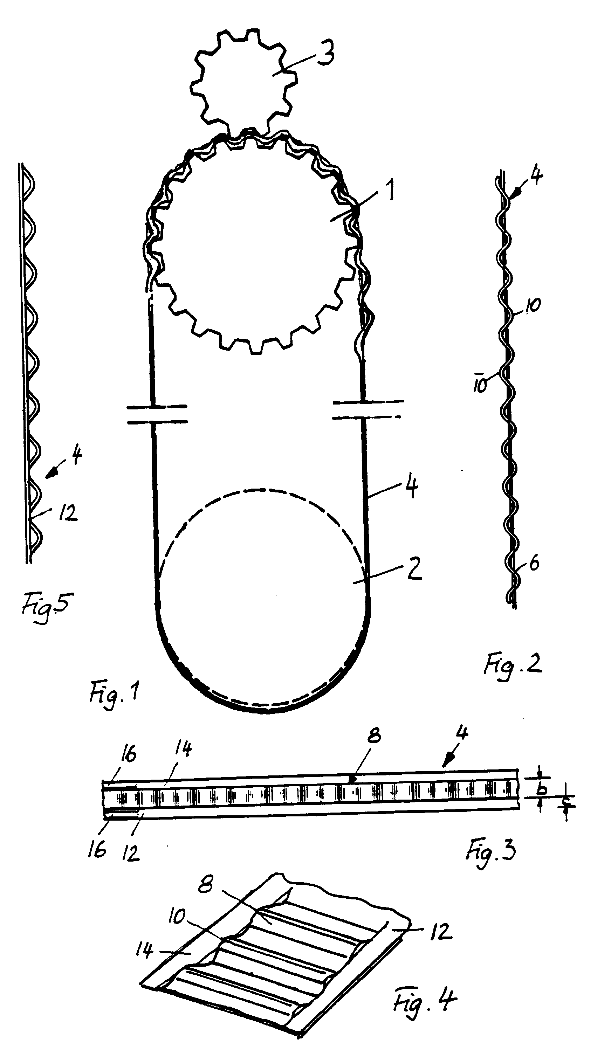

Der Riementrieb nach Fig. 1 umfaßt ein angetriebenes Zahnrad 1, ein im erforderlichen Abstand angeordnetes getriebenes Zahnrad 2, ein mit dem ersten Zahnrad lose kämmendes weiteres Zahnrad 3, das vorzugsweise breiter als das angetriebene Zahnrad 2 ist, und ein in Längsrichtung gewellter bzw. gezahnter Treibriemen 4. Die Zahnräder 1 und 2 können beliebigen Abstand je nach den Erfordernissen des Einzelfalls aufweisen. Der gewellte Treibriemen 4 ist aus Polyamid gefertigt, und zwar durch Warmprägung aus einem ursprünglich flachen, z.B. 1 mm dicken Kunststoffstreifen. Wellen- oder zahnartige Verformungen 6 stehen aus der Ebene des ursprünglich flachen Streifens etwa gleich weit in beide Richtungen vor, sh. Fig. 2 und 4. Zu beiden Querseiten der mittigen wellenförmigen Zone bzw. Wellung 8 des Treibriemens 4 sind mittig zwischen den Wellenköpfen 10, also in der Ebene des ursprünglich flachen Streifens, jeweils Seitenstreifen 12 und 14 ausgebildet, deren Breite c geringer als die halbe Breite b der Wellung 8 ist, sh. Fig. 3. Bei der Abwandlung nach Fig. 5 befinden sich die Seitenstreifen 12, 14 in der Ebene der eben ausgebildeten unteren Wellenköpfe, während die obere Wellenköpfe eine abgerundete Ausbildung haben.

Am linken Ende des Treibriemens ist in der Fig. 3 eine Reibauflage 16 auf der Oberseite der Seitenstreifen 12 und 14 angedeutet.

Auf dem Treibriemenn kann ein nicht dargestellter Abnehmer vorgesehen sein, wenn ein Garagentor in zwei Richtungen zu bewegen ist. Wenn der Betätigungsweg kleiner ist als der Abstand der beiden Zahnräder 1 und 2 voneinander, muß der Abnehmer auf keines der Zahnräder auflaufen. Dies ist keine notwendige Einschränkung, insbesondere bezüglich des Treibriemens bzw. zweiten Umlenkrads.

## Patentansprüche

1. Riementrieb mit einem über zwei rotierende gezahnte Räder geleiteten wellen- oder zahnförmigen Treibriemen aus einem Kunststoffstreifen, bei dem wenigstens das eine gezahnte Rad (Zahnrad) angetrieben wird und den Riemen formschlüssig mitnimmt,
dadurch gekennzeichnet, daß der Riemen (4) aus einem bleibend durch Prägung verformten Kunststoff gefertigt ist und daß der Riemen wenigstens auf einer Seite der Wellung einen seitlich abstehenden Randstreifen (12, 14) zur Aufnahme einer Längszugkraft aufweist.

2. Riementrieb nach Anspruch 1,
dadurch gekennzeichnet, daß ein weiteres gezahntes Rad (3) vorgesehen ist, das mit dem angetriebenen Rad (1) lose zu kämmen vermag und den Riemen (4) in dessen Zahnlücken hält.

3. Riementrieb nach Anspruch 1 oder 2,
dadurch gekennzeichnet, daß jeder Randstreifen etwa mittig zwischen den Wellenköpfen (10) vorgesehen ist.

4. Riementrieb nach Anspruch 3,
dadurch gekennzeichnet, daß das angetriebene Rad (1) seitlich der Zahnung einen zylindrischen Randbereich vom Durchmesser des Teilkreises des Zahnkranzes hat, auf dem der Randstreifen (12, 14) des Riemens (4) aufliegt.

5. Riementrieb nach Anspruch 1 oder 2,
dadurch gekennzeichnet, daß die Randstreifen (12, 14) in Höhe der Wellenköpfe vorgesehen sind und daß die Wellenköpfe in der Ebene der Randstreifen selbst eben ausgebildet sind.

6. Riementrieb nach Anspruch 4 oder 5,
dadurch gekennzeichnet, daß jeder Randstreifen (12, 14) des Riemens (4) mit einer Reibauflage (16) aus Gummi oder einem Haftgewebe versehen ist, das auf dem Randbereich des angetriebenen gezahnten Rads aufliegt.

7. Riementrieb nach einem der Ansprüche 2 bis 6,
dadurch gekennzeichnet, daß die Räder (1, 3) unterschiedliche Durchmesser aufweisen.

8. Riementrieb nach Anspruch 7,
dadurch gekennzeichnet, daß vom Antrieb des einen Zahnrads (1) auf den Antrieb des anderen Zahnrads (3) umschaltbar ist (Schaltgetriebe).

9. Treibriemen für einen Riementrieb in Form eines gewellten oder gezahnten Riemens aus einem Kunststoffstreifen, der über ein gezahntes Antriebsrad geführt werden kann,
dadurch gekennzeichnet,
daß der Riemen (4) aus einem durch Prägung bleibend verformten Kunststoff gefertigt ist und daß der Riemen zwischen den Wellenköpfen (10) wenigstens auf einer Seite der Wellung (8) einen seitlich abstehenden Randstreifen (12, 14) zur Aufnahme einer Längszugkraft aufweist.

10. Treibriemen nach Anspruch 9,
dadurch gekennzeichnet, daß jeder Randstreifen etwa mittig zwischen den Wellenköpfen (10) vorgesehen ist.

11. Treibriemen nach Anspruch 9 oder 10,
dadurch gekennzeichnet, daß der Riemen (4) aus Polyamid oder aus Polypropylen gefertigt ist.

12. Treibriemen nach einem der Ansprüche 9 bis 11,
dadurch gekennzeichnet, daß wenigstens ein Seitenstreifen (12, 14) des Riemens (4) mit einer Reibauflage (16) aus Gummi oder einem Haftgewebe versehen ist.

13. Torantrieb, insbesondere Flügel-, Paneel-, Roll- oder Schwingtorantrieb, vor allem für PKW-Garagen oder Werkräume, mit einem motorisch angetriebenen Antriebszahnrad mit einem über ein Umlenkzahnrad laufenden gewellten Treibriemen aus Kunststoff und mit Mitteln, mit denen vom Umlenkrad oder vom Riemen die Antriebskraft für das Öffnen und Schließen des Torblatts auf dieses ausgeübt wird,
dadurch gekennzeichnet, daß der Riemen (4) aus einem durch Prägung bleibend verformten Kunststoff gefertigt ist und daß der Riemen wenigstens auf einer Seite der Wellung (8) einen seitlich abstehenden Randstreifen (12, 14) zur Aufnahme einer Längszugkraft aufweist.

14. Torantrieb nach Anspruch 13,
dadurch gekennzeichnet, daß jeder Randstreifen etwa mittig zwischen den Wellenköpfen (10) vorgesehen ist.

15. Torantrieb nach Anspruch 13 oder 14,
dadurch gekennzeichnet, daß das Angetriebszahnrad (1) seitlich der Zahnung einen zylindrischen Randbereich vom Durchmesser des Teilkreises des Zahnkranzes hat, auf dem der Randstreifen (12, 14) des Riemens (4) aufliegt.

16. Torantrieb nach einem der Ansprüche 13 bis 15,
dadurch gekennzeichnet, daß die Randstreifen (12, 14) in Höhe der Wellenköpfe vorgesehen sind und daß die Wellenköpfe in der Ebene der Randstreifen selbst eben ausgebildet sind.

17. Torantrieb nach einem der Ansprüche 13 bis 16,
dadurch gekennzeichnet, daß jeder Randstreifen (12, 14) des Riemens (4) mit einer Reibauflage (16) aus Gummi oder einem Haftgewebe versehen ist.

18. PKW-Garagentor oder Werkraumtor, insbesondere Flügel-, Paneel-, Roll- oder Schwingtor mit einem geführten Torflügel, mit einem Torantrieb, mit dem der Torflügel zwischen einer Schließ- und einer Öffnungsstellung hin- und herbewegbar ist, der ein motorisch antreibbares Antriebszahnrad und wenigstens ein Umlenkzahnrad umfaßt, über die ein gewellter oder gezahnter Treibriemen aus Kunststoff umläuft, und mit Mitteln, mit denen vom Umlenkrad oder vom Riemen die Antriebskraft für das Öffnen und Schließen des Torblatts auf dieses ausgeübt wird,
dadurch gekennzeichnet, daß der Riemen (4) aus einem durch Prägung bleibend verformten Kunststoff gefertigt ist und daß der Riemen zwischen den Wellenköpfen (10) wenigstens auf einer Seite der Wellung (8) einen seitlich abstehenden Randstreifen (12, 14) zur Aufnahme einer Längszugkraft aufweist.

19. Tor nach Anspruch 18,
dadurch gekennzeichnet, daß jeder Randstreifen etwa mittig zwischen den Wellenköpfen (10) vorgesehen ist.

20. Tor nach Anspruch 18 oder 19,
dadurch gekennzeichnet, daß das Antriebszahnrad (1) seitlich der Zahnung einen zylindrischen Randbereich vom Durchmesser des Teilkreises des Zahnkranzes hat, auf dem der Randstreifen (12, 14) des Riemens (4) aufliegt.

21. Tor nach einem der Ansprüche 18 bis 20,
dadurch gekennzeichnet, daß jeder Randstreifen (12, 14) des Riemens (4) mit einer Reibauflage (16) aus Gummi oder einem Haftgewebe versehen ist.

## Claims

1. Belt drive with a tooth-like or undulatory driving belt, guided via two rotary, toothed wheels and formed from a plastic strip, in which at least one toothed wheel (gear) is driven and positively drives the belt, characterized in that the belt (4) is made from a plastics material permanently set by embossing and that, at least on one side of the corrugation, the belt has a laterally projecting marginal strip (12, 14) for absorbing a longitudinal tensile force.

2. Belt drive according to claim 1, characterized in that a further toothed wheel (3) is provided, which is able to loosely mesh with the driven wheel (1) and holds the belt (4) in its tooth spaces.

3. Belt drive according to claim 1 or 2, characterized in that each marginal strip is provided roughly centrally between the corrugation tops (10).

4. Belt drive according to claim 3, characterized in that the driven wheel (1), laterally of the tooth system, has a cylindrical marginal area with the diameter of the pitch circle of the toothed rim and on which rests the marginal strip (12, 14) of the belt (4).

5. Belt drive according to claim 1 or 2, characterized in that marginal strips (12, 14) are provided level with the corrugation tops and that the corrugation tops are planar in the plane of the marginal strips.

6. Belt drive according to claim 4 or 5, characterized in that each marginal strip (12, 14) of the belt (4) is provided with a friction support (16) of rubber or an adhesive fabric, which rests on the marginal area of the driven toothed wheel.

7. Belt drive according to one of the claims 2 to 6, characterized in that the wheels (1, 3) have different diameters.

8. Belt drive according to claim 7, characterized in that it is possible to switch from the drive of one gear (1) to the drive of the other gear (3) (intermittent gear).

9. Driving belt for a belt drive in the form of a corrugated or toothed belt formed from a plastics strip, which can be guided over a toothed driving wheel, characterized in that the belt (4) is made from a plastics material permanently set by embossing and that the belt has, between the corrugation tops (10) and at least on one side of the corrugation (8), a laterally projecting marginal strip (12, 14) for absorbing a longitudinal tensile force.

10. Driving belt according to claim 9, characterized in that each marginal strip is provided roughly centrally between the corrugation tops (10).

11. Driving belt according to claim 9 or 10, characterized in that the belt (4) is made from polyamide or polypropylene.

12. Driving belt according to one of the claims 9 to 11, characterized in that at least one marginal strip (12, 14) of the belt (4) is provided with a friction support (16) of rubber or an adhesive fabric.

13. Door drive, particularly a leaf, panel, rolling or swing door drive, particularly for car garages or workshops, with a motor driven driving gear having a corrugated, plastics material driving belt running over a return gear and having means with which, from the return gear or the belt, the driving force for the opening and closing of the door leaf, can be applied to the latter, characterized in that the belt (4) is made from a plastics material permanently set by embossing and that, at least on one side of the corrugation (8), the belt has a laterally projecting marginal strip (12, 14) for absorbing a longitudinal tensile force.

14. Door drive according to claim 13, characterized in that each marginal strip is provided roughly centrally between the corrugation tops (10).

15. Door drive according to claim 13 or 14, characterized in that, laterally of the toothed system, the driving gear (1) has a cylindrical marginal area with the diameter of the pitch circle of the toothed rim on which rests the marginal strip (12, 14) of the belt (4).

16. Door drive according to one of the claims 13 to 15, characterized in that the marginal strips (12, 14) are provided level with the corrugation heads and that the corrugation heads are planar in the plane of the marginal strips.

17. Door drive according to one of the claims 13 to 16, characterized in that each marginal strip (12, 14) of the belt (4) is provided with a friction support (16) of rubber or an adhesive fabric.

18. Car garage or workshop door, particularly a leaf, panel, rolling or swing door with a guided door leaf, having a door drive with which the door leaf can be moved backwards and forwards between a closed position and an open position, which has a motor drivable driving gear and at least one return gear, over which passes a corrugated or toothed, plastic driving belt, and with means with which, the return gear or the belt apply to the door leaf the driving force for the opening and closing thereof, characterized in that the belt (4) is made from a plastics material permanently set by embossing and that the belt, between the corrugation tops (10), on at least one side of the corrugation (8), has a laterally projecting marginal strip (12, 14) for absorbing a longitudinal tensile force.

19. Door according to claim 18, characterized in that each marginal strip is provided roughly centrally between the corrugation tops (10).

20. Door according to claim 18 or 19, characterized in that, laterally of the tooth system, the driving gear (1) has a cylindrical marginal area with the diameter of the pitch circle of the toothed rim and on which rests the marginal strip (12, 14) of the belt (4).

21. Door according to one of the claims 18 to 20, characterized in that each marginal strip (12, 14) of the belt (4) is provided with a friction support (16) of rubber or an adhesive fabric.

## Revendications

1. Entraînement par courroie comprenant une courroie d'entraînement de forme ondulée ou dentée guidée sur deux roues dentées tournantes, formée d'une bande de matière plastique, dans lequel au moins une première des roues dentées (roue d'engrenage) est motrice et entraîne la courroie par engagement mécanique,
caractérisé en ce que la courroie (4) est en matière plastique déformée de manière permanente par matriçage et en ce que la courroie présente au moins d'un côté de l'ondulation une bande latérale (12, 14) séparée latéralement destinée à supporter une force de tension longitudinale.

2. Entraînement par courroie selon la revendication 1,
caractérisé en ce qu'il comprend une autre roue dentée (3) qui peut engrener de façon lâche avec la roue dentée motrice (1) et maintient la courroie (4) dans l'entredent de cette dernière.

3. Entraînement par courroie selon la revendication 1 ou 2,
caractérisé en ce que chaque bande latérale est disposée sensiblement en position médiane entre les crêtes d'ondulation (10).

4. Entraînement par courroie selon la revendication 3,
caractérisé en ce que la roue motrice (1) possède à côté de sa denture une zone latérale cylindrique ayant le même diamètre que le cercle primitif de la couronne dentée, sur laquelle s'applique la bande latérale (12, 14) de la courroie (4).

5. Entraînement par courroie selon la revendication 1 ou 2,
caractérisé en ce que les bandes latérales (12, 14) sont disposées à la hauteur des crêtes d'ondulation et en ce que les crêtes d'ondulation présentent elles-mêmes un aplatissement dans le plan des bandes latérales.

6. Entraînement par courroie selon la revendication 4 ou 5,
caractérisé en ce que chaque bande latérale (12, 14) de la courroie (4) est pourvue d'un revêtement de friction (16) en caoutchouc ou d'un entoilage adhérent qui s'applique sur la zone latérale de la roue dentée motrice.

7. Entraînement par courroie selon l'une quelconque des revendications 2 à 6,
caractérisé en ce que les roues (1, 3) présentent des diamètres différents.

8. Entraînement par courroie selon la revendication 7,
caractérisé en ce qu'on peut passer de l'entraînement par la première roue dentée (1) à un entraînement par l'autre roue dentée (3) (mécanisme de changement de vitesse).

9. Courroie d'entraînement pour un entraînement par courroie sous forme de courroie ondulée ou dentée faite d'une bande de matière plastique qui peut être guidée sur une roue dentée motrice,
caractérisée en ce que
la courroie (4) est en matière plastique déformée de manière permanente par matriçage et en ce que la courroie présente entre les crêtes d'ondulation (10) au moins d'un côté de l'ondulation (8) une bande latérale (12, 14) séparée latéralement et destinée à supporter une force de tension longitudinale.

10. Courroie d'entraînement selon la revendication 9,
caractérisée en ce que chaque bande latérale est disposée sensiblement en position médiane entre les crêtes d'ondulation (10).

11. Courroie d'entraînement selon la revendication 9 ou 10,
caractérisée en ce que la courroie (4) est en polyamide ou en polypropylène.

12. Courroie d'entraînement selon l'une quelconque des revendications 9 à 11,
caractérisée en ce qu'au moins une bande latérale (12, 14) de la courroie (4) est pourvue d'un revêtement de friction (16) en caoutchouc ou d'un entoilage adhérent.

13. Entraînement de porte, en particulier entraînement de porte à battants, de porte coulissante, de porte articulée ou de porte basculante, en particulier pour garages de véhicules ou pour ateliers, comprenant une roue dentée motrice entraînée par moteur, une courroie d'entraînement ondulée en matière plastique circulant sur une roue dentée de renvoi et des moyens par lesquels la force d'entraînement de la roue de renvoi ou de la courroie est exercée sur le panneau de porte pour l'ouverture ou la fermeture de ce dernier,
caractérisé en ce que la courroie (4) est en matière plastique déformée de manière permanente par matriçage et en ce que la courroie présente au moins d'un côté de l'ondulation (8) une bande latérale (12, 14) séparée latéralement destinée à supporter une force de tension longitudinale.

14. Entraînement de porte selon la revendication 13,
caractérisé en ce que chaque bande latérale est disposée sensiblement en position médiane entre les crêtes d'ondulation (10).

15. Entraînement de porte selon la revendication 13 ou 14,
caractérisé en ce que la roue dentée motrice (1) possède à côté de sa denture une zone latérale cylindrique ayant le même diamètre que le cercle primitif de la couronne dentée, sur laquelle s'applique la bande latérale (12, 14) de la courroie (4).

16. Entraînement de porte selon l'une quelconque des revendications 13 à 15,
caractérisé en ce que les bandes latérales (12, 14) sont disposées à la hauteur des crêtes d'ondulation et en ce que les crêtes d'ondulation présentent elles-mêmes un aplatissement dans le plan des bandes latérale.

17. Entraînement de porte selon l'une quelconque des revendications 13 à 16,
caractérisé en ce que chaque bande latérale (12, 14) de la courroie (4) est pourvue d'un revêtement de friction (16) en caoutchouc ou d'un entoilage adhérent.

18. Porte de garage de véhicule ou d'atelier, en particulier porte à battants, porte coulissante, porte articulée à rideau ou porte basculante comprenant un panneau de porte guidé, comprenant un entraînement de porte, avec lequel le panneau de porte peut être déplacé dans les deux sens entre une position de fermeture et une position d'ouverture, qui comprend une roue dentée motrice pouvant être actionnée par moteur et au moins une roue dentée de renvoi sur lesquelles circule une courroie d'entraînement ondulée ou dentée en matière plastique, et des moyens par lesquels la force d'entraînement de la roue de renvoi ou de la courroie est exercée sur le panneau de porte pour l'ouverture ou la fermeture de ce dernier,
caractérisée en ce que la courroie (4) est en matière plastique déformée de manière permanente par matriçage et en ce que la courroie présente entre les crêtes d'ondulation (10) au moins d'un côté de l'ondulation (8) une bande latérale (12, 14) séparée latéralement destinée à supporter une force de tension longitudinale.

19. Porte selon la revendication 18,
caractérisée en ce que chaque bande latérale est disposée sensiblement en position médiane entre les crêtes d'ondulation (10).

20. Porte selon la revendication 18 ou 19,
caractérisée en ce que la roue dentée motrice (1) possède à côté de sa denture une zone latérale cylindrique ayant le même diamètre que le cercle primitif de la couronne dentée, sur laquelle s'applique la bande latérale (12, 14) de la courroie (4).

21. Porte selon l'une quelconque des revendications 18 à 20,
caractérisée en ce que chaque bande latérale (12, 14) de la courroie (4) est pourvue d'un revêtement de friction (16) en caoutchouc ou d'un entoilage adhérent.
